# EUROPÄISCHE PATENTSCHRIFT

(11) **EP 1 896 279 B1**
(45) Veröffentlichungstag und Bekanntmachung des Hinweises auf die Patenterteilung: **01.09.2010**
(21) Anmeldenummer: 06753834.8
(22) Anmeldetag: 24.05.2006
(51) Int. Cl.: B60G 3/06, B60G 7/00, B60G 15/07

(54) **RADAUFHÄNGUNG**
WHEEL SUSPENSION
SUSPENSION DE ROUE

(30) Priorität: 23.06.2005 DE 102005029641
(43) Veröffentlichungstag der Anmeldung: 12.03.2008
(73) Patentinhaber: GM Global Technology Operations, Inc., Detroit, MI 48265-3000 (US)
(72) Erfinder: SIEBENEICK, Jürgen, 55430 Oberwesel (DE)
(74) Vertreter: Strauss, Peter
(86) Internationale Anmeldenummer: PCT/EP2006/004937
(87) Internationale Veröffentlichungsnummer: WO 2006/136259

(56) Entgegenhaltungen:
- EP-A- 1 319 533
- DE-A1- 19 949 452
- FR-A- 2 663 266
- US-A- 3 926 454
- PATENT ABSTRACTS OF JAPAN Bd. 018, Nr. 576 (M-1697), 4. November 1994 (1994-11-04) & JP 06 211014 A (HONDA MOTOR CO LTD), 2. August 1994 (1994-08-02)
- HUN H ET AL: "TRAIN AVANT PIVOT INDEPENDANT FRONT AXE STEERING KNUCKLE PIVOT 2E SECTION TECHNIQUE <DYNAMIQUE DU VEHICULE ET LIAISON AU SOL> - S.I.A. NO 89036" INGENIEURS DE L'AUTOMOBILE, EDITIONS VB, GARCHES, FR, Nr. 650, 1. September 1989 (1989-09-01), Seiten 140-141, XP000073062 ISSN: 0020-1200

## Beschreibung

Die Erfindung bezieht sich auf eine Radaufhängung, insbesondere Vorderradaufhängung für ein Kraftfahrzeug mit einem Achsträger, der um eine vertikale Lenkachse in einem oberen und einem unteren Lager schwenkbar an einer gabelförmigen Federbeinstütze gelagert ist, wobei das obere und das untere Lager in seitlich von einer Basis der Federbeinstütze abstehenden Gabelarmen ausgebildet sind, mit einem aus einer Feder und einem Dämpfer bestehenden Federbein, das die Federbeinstütze mit der Karosserie des Fahrzeuges zur Aufnahme der Fahrzeuglast verbindet, mit einem Querlenker, der jeweils mit einer sich im Wesentlichen in Längsrichtung des Fahrzeuges erstreckenden horizontalen Achse einerseits mit der Karosserie und andererseits mit der Federbeinstütze verbunden ist, wobei die karosserieseitige Achse aus zwei Lagern besteht und der untere Gabelarm der gabelförmigen Federbeinstütze zwei gegenüberliegende beabstandete Backen hat.

Eine derartige Radaufhängung ist in der EP 1 319 533 A1 beschrieben. Die Verbindung des Querlenkers mit der Federbeinstütze (auch nur kurz Gabel genannt) ist dabei wie folgt realisiert. Die Gabel weist zwei beabstandete Arme auf, zwischen denen eine Lagerachse verläuft, auf der ein mit dem Querlenker verbundenes Lagerauge gelagert ist. Zwischen dem Lagerauge und der Lagerachse befindet sich eine Lagerbuchse aus Kunststoff, in der die bei einer Kurvenfahrt auftretenden Seitenkräfte abgestützt werden. Die Buchse besitzt dazu eine gewisse Steifigkeit.

Allerdings wird wegen einer stets vorhandenen Restnachgiebigkeit der Lagerbuchse die Gabel von den auf das Rad wirkenden Seitenkräften um eine im Wesentlichen vertikale Achse gedreht, so dass der Störkrafthebelarm in nicht gewünschter Weise vergrößert wird. Durch diese zusätzliche Drehung der Gabel wird außerdem der Lenkwinkel der Räder, also deren Winkellage zur Karosserie, nicht eindeutig durch den Lenkeinschlag, das heißt durch die Drehung des Achsträgers in Bezug zur Gabel definiert. Außerdem werden die beim Bremsen und Beschleunigen zwischen der Gabel und Achsträger auftretenden Längskräfte nicht genügend gedämpft.

In der JP 06-211014 ist eine Radaufhängung beschrieben, bei der das radseitige Ende des Querlenkers gegabelt ist und die Gabelenden in je einem Lager auf den Enden einer Stange gelagert sind, die seitlich von der Basis der Federbeinstütze abstehen.

Die Erfindung beruht somit auf der Aufgabe, mit einfachen Mitteln das Lenk-, Brems- und Beschleunigungsverhalten der Radaufhängung zu verbessern.

Zur Lösung des Problems sieht die Erfindung vor, dass die Lagerung des Querlenkers an der gabelförmigen Federbeinstütze aus zwei beabstandeten Lagern besteht, die bezogen auf die Fahrtrichtung vor und hinter der Lenkachse liegen und ein Doppellager (19) bilden, wozu sich das äußere Ende des Querlenkers (5) zwischen den Backen befindet und in den Backen jeweils ein Lagerauge ausgebildet ist, das auf einem von zwei seitlich vom Ende des Querlenkers (5) abstehenden Achszapfen mittels Lagerbuchsen (23, 24) gelagert ist.

Dies hat den Vorteil, dass diese beiden Lager unterschiedlich steif ausgelegt werden können, wodurch das Lenkverhalten der Achse durch den gewonnenen Freiheitsgrad exakter beeinflusst werden kann, so dass das Lenkverhalten des Fahrzeuges insgesamt verbessert werden kann. Wegen des größeren Abstandes der Lagerbuchsen zur Lenkachse verringert sich selbst bei einer gegenüber dem Stand der Technik unveränderten Steifigkeit der Lagerbuchsen der Winkel, um den sich die Gabel beim Auftreten von Seitenkräften drehen kann.

Da das Doppellager eine Beweglichkeit entlang der Lagerachse aufweist, befindet sich, um Beschädigungen zu vermeiden, zwischen den gegenüberliegenden Flächen am Querlenker und an der Gabel jeweils radial zur Lagerachse eine Anschlagscheibe, die eine geeignete Anlaufkontur aufweisen. Die Anschlagscheiben sind entweder als Einzelbauteile oder als integraler Bestandteil der Gabel bzw. des Querlenkers ausgebildet.

Dabei besitzen die Lagerbuchsen zusätzlich aus dem Lagerauge hervorstehende, radial nach außen weisende Flansche, die zur Anlage an die Anschlagscheibe gebracht werden und als Gummipuffer dienen.

Die Verbindung des Achsträgers mit der Gabel besitzt ein oberes und ein unteres Lager, wobei das obere Lager aus einer Lagerkugel besteht, die in einer Lagerpfanne an der Gabel liegt und das untere Lager als Schwenklager ausgebildet ist. Eine solche Anordnung ist relativ leicht zu montieren. Darüber hinaus kann die Achse leicht, je nach Nachgiebigkeit des Schwenklagers in alle Richtungen schwenken und so das Lenkverhalten der Radaufhängung unterstützen.

Um einen Nachlauf der Achse zu erreichen, ist die Lenkachse in Fahrtrichtung nach hinten gekippt. Generell kann die freie Einstellung der Lenkachse gegenüber der Ausrichtung des Federbeins und der Ausrichtung des Federbeins zur Karosserie sowie die Einstellbarkeit der Lenkungsparameter unabhängig von den Parametern der Ein- und Ausfederkinematik als Vorteil des vorliegenden Achstypes angesehen werden.

Die Schwenkachse, in der der Querlenker an der Gabel befestigt ist, befindet sich vorzugsweise unter dem unteren Lager des Achsträgers an der Gabel. Es sind aber auch besonders kompakte Lösungen denkbar, bei denen sich das Schwenklager zwischen den beiden Lagern des Achsträgers an der Gabel befindet.

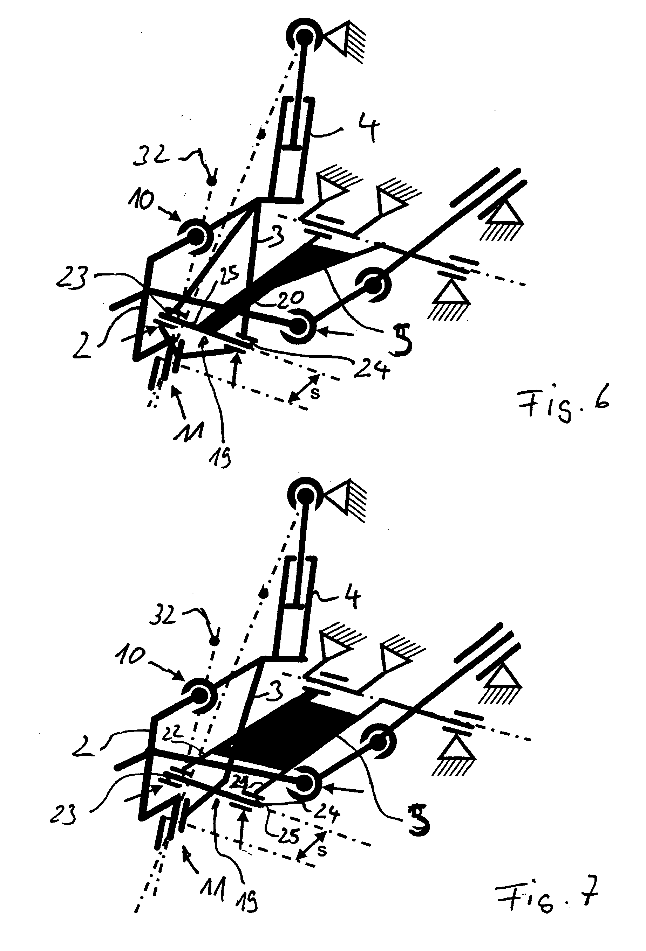

Im Folgenden soll anhand eines Ausführungsbeispiels die Erfindung näher erläutert werden. Die Fig. 7 dient der allgemeinen Erläuterung, die dort gezeigte Ausführung ist nicht Gegenstand des Anspruches 1. Dazu zeigt
- Fig. 1: eine perspektivische Darstellung der Radaufhängung mit einer Sicht von in Fahrtrichtung gesehen hinten;
- Fig. 2: eine Seitenansicht der Radaufhängung mit Blick auf den Achsträger;
- Fig. 3: eine Detaildarstellung der Lagerung des Querlenkers am Achsträger im Schnitt;
- Fig. 4: eine Teilschnittdarstellung der Radaufhängung in einer Ebene quer zur Fahrzeuglängsachse;
- Fig. 5: eine perspektivische Darstellung einer zweiten Ausführungsform der Radaufhängung;
- Fig. 6: eine schematische Darstellung der Radaufhängung mit einer ersten Form des Doppellagers und
- Fig. 7: eine schematische Darstellung der Radaufhängung mit einer zweiten Form des Doppellagers.

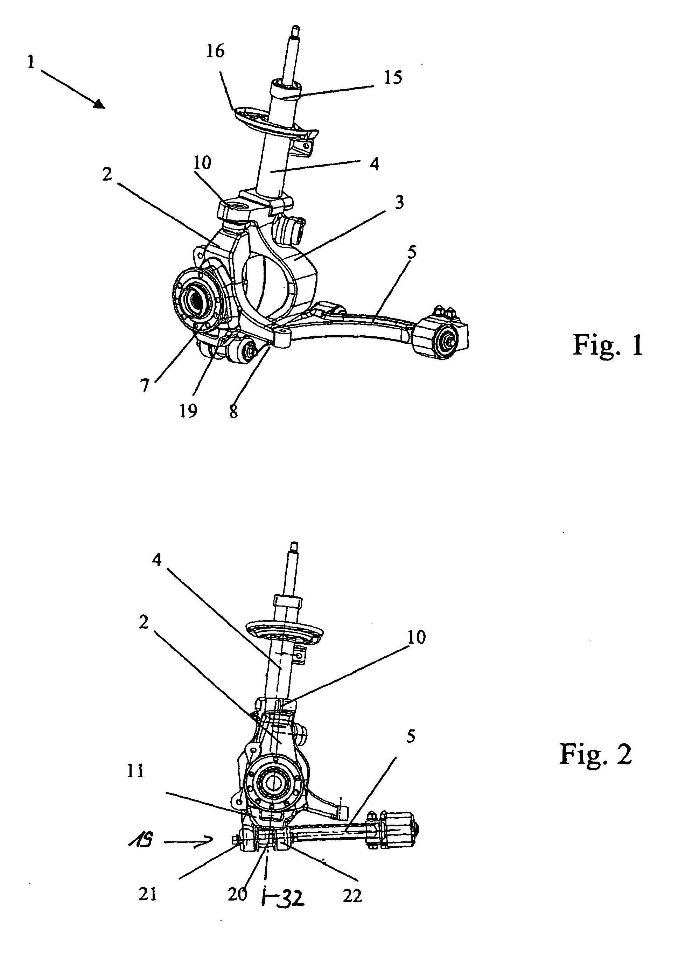

Es wird zunächst auf die Figur 1 Bezug genommen. Die Radaufhängung 1 besteht aus einem Achsträger 2, einer gabelförmigen Federbeinstütze 3, einem Federbein 4 sowie einem Querlenker 5. Der Achsträger 2 dient der Aufnahme einer Radachse 6, die in einem Kranz 7 endet, an den die Radfelge angeschraubt wird. Der Achsträger 2 besitzt weiterhin einen Lenkerarm 8, der mit dem Lenkgetriebe verbunden wird. Die gabelförmige Federbeinstütze 3 besitzt an ihrem oberen Ende einen oberen Gabelarm mit einem oberen Lager 10 für den Achsträger 2 und an ihrem unteren Ende eine unteren Gabelarm mit einem unteren Lager 11, das hier verdeckt dargestellt ist. Die Basis der gabelförmigen Federbeinstütze 3 besteht aus zwei bogenförmigen Abschnitten, die zwischen sich eine Öffnung frei lassen, durch die die Antriebsachse für das Radlager hindurch geführt ist.

Am oberen Ende der gabelförmigen Federbeinstütze schließt sich ein Federbein 4 an, das im Wesentlichen aus einem Dämpfer 15 besteht sowie einem Sockel 16 für eine hier nicht näher dargestellte Feder. Das obere Ende des Federbeines 4 wird in bekannter Weise mit der Karosserie des Fahrzeuges verbunden, wobei sich die Feder an der Karosserie abstützt und damit die Fahrzeuglast auf die Radaufhängung überträgt. Die obere Befestigung des Federbeins 4 an der Karosserie ist so ausgebildet, dass das Federbein 4 in alle Richtungen leicht kippen kann.

Figur 2 zeigt eine Seitenansicht, wobei gleiche Teile mit denselben Bezugszeichen wie in Figur 1 versehen sind. Man erkennt insbesondere, wie auch schon in Figur 1, dass das karosserieseitige Ende des Querlenkers 5 deutlich breiter ist und dort zwei Lager aufweist, mit denen er an der Karosserie bzw. an einem Karosserierahmen in zwei Schwenklagern, deren Achsen in Fahrzeuglängsrichtung verlaufen, befestigt ist. Das eine Lager befindet sich in Querrichtung betrachtet unmittelbar hinter dem Achsträger, das andere in Fahrtrichtung gesehen hinter dem einen Lager.

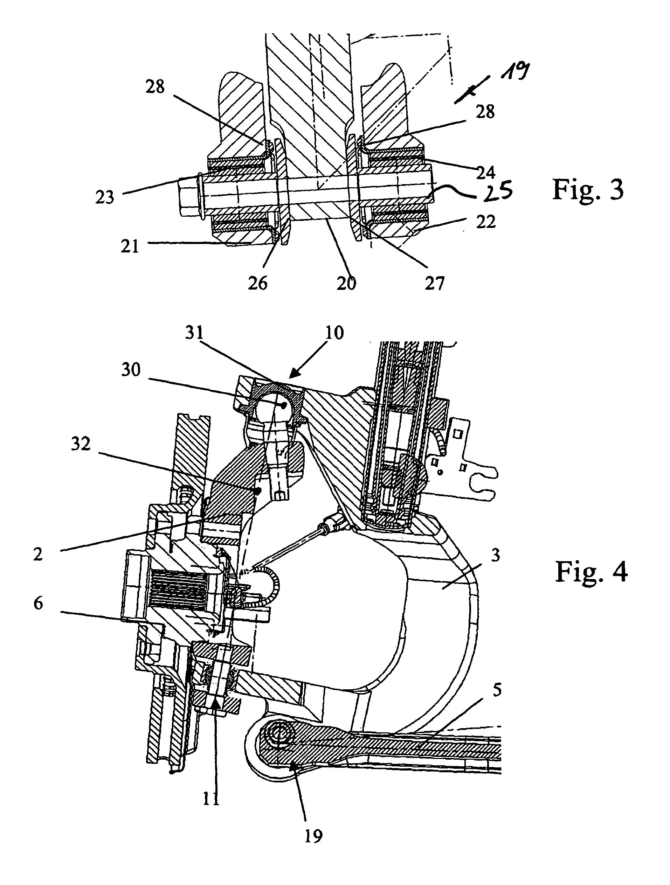

Figur 3 zeigt eine Darstellung eines Doppellagers 19, mit dem der Querlenker 5 an der gabelförmigen Federbeinstütze 3 gelagert ist. Dazu besitzt der Querlenker 5 einen massiven Fortsatz 20, an dem sich zu beiden Seiten jeweils eine Backe 21, 22 des gabelförmig gestalteten unteren Gabelarmes befindet. In den Backen 21, 22 ist je ein Lagerauge mit je einer Lagerbuchse 23, 24 ausgebildet. Durch den Fortsatz 20 verläuft eine Lagerachse 25, auf deren beiderseits des Fortsatzes hervorstehenden Achszapfen sich die Lagerbuchsen 23, 24 befinden.

Zwischen dem Fortsatz 20 und den Lageraugen befindet sich je eine Anschlagscheibe 26, 27, wobei die Lagerbuchsen 23, 24 einen zum Fortsatz weisenden, radial nach außen ragenden Flansch 28 aufweisen, der zur Anlage an die Anschlagscheiben 26, 27 gelangen. Eine schematische Darstellung dieser Anordnung kann der Fig. 6 entnommen werden.

Figur 4 zeigt einen Querschnitt durch die Radaufhängung. Man erkennt, dass das obere Lager 10 aus einer Lagerkugel 30 in einer Lagerpfanne 31 in dem oberen Gabelarm der Federbeinstütze 3 besteht, während es sich bei dem unteren Lager 11 um ein vertikal ausgerichtetes Schwenklager handelt. Grundsätzlich können auch andere Lagertypen eingebaut werden: Anstelle des oberen Kugelgelenks kann z. B. eine zweireihige Schrägkugellagereinheit und das untere Schwenklager durch ein einreihiges Pendelrollenlager oder durch eine einfache Gleitbuchse ersetzt werden. Die durch die beiden Lager 10, 11 definierte Lenkachse 32 verläuft leicht nach innen gekippt.

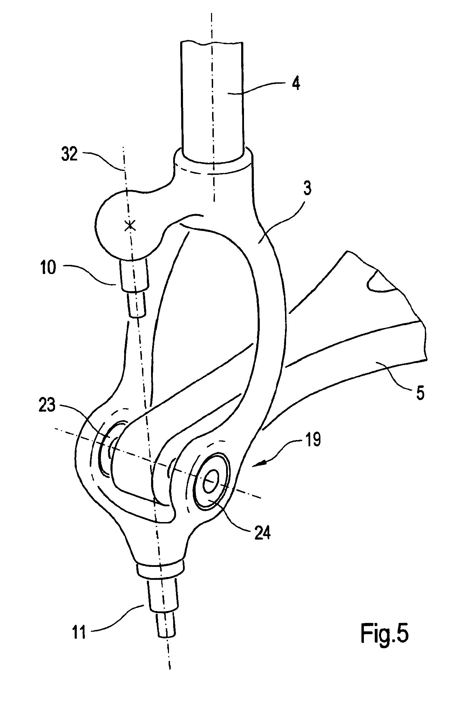

Das Doppellager 19 befindet sich leicht unterhalb, nach innen versetzt, gegenüber dem unteren Lager 11. Wenn es die Lage der Bremsscheibe innerhalb der Radfelge und die Annäherung bei Lenkeinschlag erlauben, ist es auch möglich, das obere und untere Lager 10, 11 weiter auseinander zu setzen und das Doppellager 19 vertikal gesehen zwischen diesen anzuordnen. Diese Lösung ist in der Fig. 5 perspektivisch dargestellt, wobei die Fig. 6 die Lösung wiederum schematisch wiedergibt.

Fig 7. zeigt schematisch eine etwas andere Anordnung des Doppellagers 19. Bei dieser Ausführung ist das dem Doppellager zugewandte Ende des Querlenkers 5 gegabelt und bildet zwei Backen 21, 22, zwischen denen sich der untere Gabelarm der Federbeinstütze 3 erstreckt. In den Backen sind die Lageraugen ausgebildet. Vom unteren Gabelarm stehen seitlich zwei in die Lageraugen ragende Lagerzapfen ab und bilden damit die Lagerachse 25 des Doppellagers 19.

Zur Identifikation der Komponenten der Radaufhängung sind in den Fig. 5, 6 und 7 sich entsprechende Teile mit denselben Bezugsziffern versehen.

### Bezugszeichenliste

- 1: Radaufhängung
- 2: Achsträger
- 3: gabelförmige Federbeinstütze
- 4: Federbein
- 5: Querlenker
- 6: Radachse
- 7: Kranz
- 8: Lenkerarm
- 9:
- 10: oberes Lager
- 11: unteres Lager
- 12:
- 13:
- 14:
- 15: Dämpfer
- 16: Sockel
- 17:
- 18:
- 19: Doppellager
- 20: Fortsatz
- 21, 22: Backen
- 23: Lagerbuchse
- 24: Lagerbuchse
- 25: Lagerachse
- 26, 27: Anschlagscheibe
- 28: Flansch
- 29:
- 30: Lagerkugel
- 31: Lagerpfanne
- 32: Lenkachse

## Patentansprüche

1. Radaufhängung (1), insbesondere Vorderradaufhängung, für ein Kraftfahrzeug mit einem Achsträger (2), der um eine vertikale Lenkachse in einem oberen (10) und einem unteren (11) Lager schwenkbar an einer gabelförmigen Federbeinstütze (3) gelagert ist, wobei das obere (10) und das untere (11) Lager in seitlich von einer Basis der Federbeinstütze (3) abstehenden Gabelarmen ausgebildet sind, mit einem aus einer Feder und einem Dämpfer (15) bestehenden Federbein (14), das die Federbeinstütze (3) mit der Karosserie des Fahrzeuges zur Aufnahme der Fahrzeuglast verbindet, mit einem Querlenker (5), der jeweils mit einer sich in Längsrichtung des Fahrzeuges erstreckenden horizontalen Achse einerseits mit der Karosserie und andererseits mit der Federbeinstütze (3) verbunden ist, wobei die karosserieseitige Achse aus zwei Lagern besteht und der untere Gabelarm der gabelförmigen Federbeinstütze (3) zwei gegenüberliegende beabstandete Backen (21, 22) hat, **dadurch gekennzeichnet, dass** die Lagerung des Querlenkers (5) an der gabelförmigen Federbeinstütze (3) aus zwei beabstandeten Lagern besteht, die bezogen auf die Fahrtrichtung vor und hinter der Lenkachse (32) liegen und ein Doppellager (19) bilden, wozu sich das äußere Ende des Querlenkers (5) zwischen den Backen befindet und in den Backen jeweils ein Lagerauge ausgebildet ist, das auf einem von zwei seitlich vom Ende des Querlenkers (5) abstehenden Achszapfen mittels Lagerbuchsen (23, 24) gelagert ist.

2. Radaufhängung nach Anspruch 1, **dadurch gekennzeichnet, dass** sich zwischen den beiden Lageraugen und dem Fortsatz (20) je eine Anschlagscheibe (26, 27) befindet.

3. Radaufhängung nach Anspruch 2, **dadurch gekennzeichnet, dass** die Lagerbuchsen (23, 24) zusätzlich aus dem Lagerauge hervorstehende, radial nach außen weisende Flansche (28) aufweisen, die zur Anlage an die Anschlagscheibe (26, 27) gebracht werden und als Gummipuffer dienen.

4. Radaufhängung nach Anspruch 1, **dadurch gekennzeichnet, dass** die Lagerbuchsen (23, 24) eine große laterale Steifigkeit und eine niedrige Steifigkeit senkrecht dazu aufweisen.

5. Radaufhängung nach Anspruch 1 oder 4, **dadurch gekennzeichnet, dass** die beiden Lagerbuchsen (23, 24), die das Doppellager bilden, als Schwenklager ausgebildet sind.

6. Radaufhängung nach Anspruch 1, **dadurch gekennzeichnet, dass** die Verbindung des Achsträgers (2) mit der gabelförmigen Federbeinstütze (3) ein oberes und ein unteres Lager (10, 11) besitzt, wobei das obere Lager (10) aus einer Lagerkugel (30) besteht, die in einer Lagerpfanne (31) im oberen Arm der gabelförmigen Federbeinstütze (3) liegt und das untere Lager (11) als Schwenklager ausgebildet ist.

7. Radaufhängung nach Anspruch 6, **dadurch gekennzeichnet, dass** die Lenkachse (32) in Fahrtrichtung nach hinten gekippt ist.

8. Radaufhängung nach Anspruch 7, **dadurch gekennzeichnet, dass** die Lenkachse (32) nach innen gekippt und parallel zum Federbein (4) ausgerichtet ist.

9. Radaufhängung nach einem der Ansprüche 1 bis 8, **dadurch gekennzeichnet, dass** das Doppellager (19), in dem der Querlenker (5) an der gabelförmigen Federbeinstütze (3) befestigt ist, sich vorzugsweise unter dem unteren Lager (11) des Achsträgers (2) an der gabelförmigen Federbeinstütze (3) befindet.

10. Radaufhängung nach einem der Ansprüche 1 bis 8, **dadurch gekennzeichnet, dass** das Doppellager (19) sich zwischen den beiden Lagern (10, 11) des Achsträgers (2) an der gabelförmigen Federbeinstütze (3) befindet.

## Claims

1. A wheel suspension (1), especially a front suspension, for a motor vehicle with an axle carrier (2) which is mounted on a fork-like suspension strut support (3) in a pivoting manner about a vertical steering axle in an upper (10) and a bottom (11) bearing, with the upper (10) and bottom (11) bearing being arranged in fork arms protruding from a base of the suspension strut support (3), comprising a strut (14) consisting of a spring and a damper (15) which connects the suspension strut support (3) with the body of the vehicle for absorbing the vehicle load, a transverse control arm (5) which is connected, with one horizontal axle each extending in the longitudinal direction of the vehicle, on the one hand with the body and on the other hand with the suspension strut support (3), with the axle on the body side consisting of two bearings and the bottom fork arm of the fork-like suspension strut support (3) having two oppositely spaced cheeks (21, 22), **characterized in that** the bearing of the transverse control arm (5) on the fork-like suspension strut support (3) consists of two spaced bearings which are disposed in front of and behind the steering axle (32) and from a double bearing, for which purpose the outer end of the transverse control arm (5) is disposed between the cheeks and one bearing boss each is formed in the cheeks which is held by means of bearing bushes (23, 24) on one of two kingpins protruding laterally from the end of the transverse control arm (5).

2. A wheel suspension according to claim 1, **characterized in that** one guide washer (26, 27) each is disposed between the two bearing bosses and the projection (20).

3. A wheel suspension according to claim 2, **characterized in that** the bearing bushes (23, 24) additionally comprise flanges (28) which protrude from the bearing bosses, face radially to the outside, are brought to sit close to the guide washer (26, 27) and are used as rubber buffers.

4. A wheel suspension according to claim 1, **characterized in that** the bearing bushes (23, 24) have a high lateral stiffness and a low stiffness perpendicularly thereto.

5. A wheel suspension according to claim 1 or 4, **characterized in that** the two bearing bushes (23, 24) which form the double bearing are arranged as swivel bearings.

6. A wheel suspension according to claim 1, **characterized in that** the connection of the axle carrier (2) with the fork-like suspension strut support (3) comprises an upper and a bottom bearing (10, 11), with the upper bearing (10) consisting of a bearing ball (30) which is disposed in a step bearing (31) in the upper arm of the fork-like suspension strut support (3) and the bottom bearing (11) is arranged as a swivel bearing.

7. A wheel suspension according to claim 6, **characterized in that** the steering axle (32) is tilted to the back in the driving direction.

8. A wheel suspension according to claim 6, **characterized in that** the steering axle (32) is tilted to the inside and is aligned parallel to the suspension strut (4).

9. A wheel suspension according to one of the claims 1 to 8, **characterized in that** the double bearing (19) in which the transverse control arm (5) is fixed to the fork-like suspension strut support (3) is preferably disposed beneath the bottom bearing (11) of the axle carrier (2) on the fork-like suspension strut support (3).

10. A wheel suspension according to one of the claims 1 to 8, **characterized in that** the double bearing (19) is disposed between the two bearings (10, 11) of the axle carrier (2) on the fork-like suspension strut support (3).

## Revendications

1. Suspension de roue (1), en particulier suspension de roue avant, pour un véhicule à moteur avec un support d'essieu (2) pouvant pivoter autour d'un axe de guidage vertical dans un palier supérieur (10) et un palier inférieur (11) sur un appui de jambe de force à ressort (3) en forme de fourche, dans lequel le palier supérieur (10) et le palier inférieur (11) sont formés dans des bras de fourche s'écartant latéralement à partir d'une base de l'appui de jambe de force à ressort (3), avec une jambe de force à ressort (14) composée d'un ressort et d'un amortisseur (15), qui relie l'appui de jambe de force à ressort (3) à la carrosserie du véhicule pour recevoir la charge du véhicule, avec une bielle transversale (5) qui est reliée d'une part à la carrosserie avec un axe horizontal dans le sens longitudinal du véhicule et d'autre part à l'appui de jambe de force à ressort (3), l'axe du côté de la carrosserie se composant de deux paliers et le bras de fourche inférieur de l'appui de jambe de force à ressort (3) possédant deux mâchoires (21, 22) espacées se faisant face, **caractérisée en ce que** l'appui de la bielle transversale (5) sur l'appui de jambe de force à ressort (3) en forme de fourche se compose de deux paliers espacés qui se trouvent avant et après l'axe de guidage (32) dans le sens de la marche et forment un double palier (19), ce pour quoi l'extrémité extérieure de la bielle transversale (5) se trouve entre les mâchoires et un oeillet de support est formé dans chacune des mâchoires et supporté sur un de deux pivots d'axe dépassant latéralement de l'extrémité de la bielle transversale (5) au moyen de coussinets (23, 24).

2. Suspension de roue selon la revendication 1, **caractérisée en ce qu'**un disque de butée (26, 27) est prévu entre chacun des deux oeillets de support et la saillie (20).

3. Suspension de roue selon la revendication 2, **caractérisée en ce que** les coussinets (23, 24) présentent en outre des brides (28) dépassant de l'oeillet de palier et dirigées vers l'extérieur dans le sens radial, qui sont amenées à reposer sur le disque de butée (26, 27) et servent de tampons en caoutchouc.

4. Suspension de roue selon la revendication 1, **caractérisée en ce que** les coussinets (23, 24) présentent une grande rigidité latérale et une faible rigidité perpendiculairement à celle-ci.

5. Suspension de roue selon la revendication 1 ou 4, **caractérisée en ce que** les deux coussinets (23, 24) formant le double palier sont conçus comme des paliers de pivotement.

6. Suspension de roue selon la revendication 1, **caractérisée en ce que** la liaison du support d'essieu (2) avec l'appui de jambe de force à ressort (3) en forme de fourche possède un palier supérieur et un palier inférieur (10, 11), le palier supérieur (10) se composant d'une rotule de palier (30) qui repose dans une cuvette de palier (31) dans le bras supérieur de l'appui de jambe de force à ressort (3) en forme de fourche et le palier inférieur (11) étant conçu comme un palier pivotant.

7. Suspension de roue selon la revendication 6, **caractérisée en ce que** l'axe de guidage (32) est incliné vers l'arrière dans le sens de la marche.

8. Suspension de roue selon la revendication 7, **caractérisée en ce que** l'axe de guidage (32) est incliné vers l'intérieur et orienté parallèlement à la jambe de force à ressort (4).

9. Suspension de roue selon l'une des revendications 1 à 8, **caractérisée en ce que** le double palier (19) dans lequel la bielle transversale (5) est fixée sur l'appui de jambe de force à ressort (3) en forme de fourche se trouve de préférence sous le palier inférieur (11) du support d'essieu (2) sur l'appui de jambe de force à ressort (3) en forme de fourche.

10. Suspension de roue selon l'une des revendications 1 à 8, **caractérisée en ce que** le double palier (19) se trouve entre les deux paliers (10, 11) du support d'essieu (2) sur l'appui de jambe de force à ressort (3) en forme de fourche.
